# EUROPÄISCHE PATENTANMELDUNG

(11) **EP 1 107 163 A1**
(43) Veröffentlichungstag der Anmeldung: **13.06.2001**
(21) Anmeldenummer: 99124538.2
(22) Anmeldetag: 09.12.1999
(51) Int. Cl.: G06K 7/00

(54) **Verfahren zur Datenübertragung in einem Identifikationssystem mit einem vom Schreib-Lese-Gerät (SLG) vorgegebenen Zeitraster**

(71) Anmelder: SIEMENS AKTIENGESELLSCHAFT, 80333 München (DE)
(72) Erfinder: Schiefer, Martin, 3100 St. Pölten (AT); Konrad, Wolfgang, 2340 Mödling (AT); Veith, Peter Ernst, 1190 Wien (AT); Pusch, Wolfgang, Dr., 1060 Wien (AT)

(57) **Zusammenfassung**

Die Erfindung betrifft ein Verfahren zur Datenübertragung zwischen mindestens einem Schreib-Lese-Gerät (SLG) und mindestens einem mobilen Datenspeicher (MDS) in einem Identifikationssystem mit mindestens einem an Objekten angebrachten mobilen Datenspeicher (MDS) zur Erfassung von objektbezogenen Zustands- und/oder Prozeßdaten z.B. in einem Versand-, Transport- und/oder Fertigungssystem der einzelnen Objekte, wobei vom Schreib-Lese-Gerät (SLG) eine Zeitschlitzstruktur zur Datenübertragung mit dem mobilen Datenspeicher (MDS) vorgegeben wird.

## Beschreibung

Die Erfindung betrifft ein Verfahren zur Datenübertragung mit den Merkmalen des Oberbegriffs des Patentanspruchs 1.

Als Stand der Technik sind Identifikationssysteme bekannt, die zumindest ein stationäres Schreib-Lese-Gerät enthalten, welche Daten mit mobilen Datenspeichern über eine in der Regel auf Funk basierender Datenübertragungsstrecke berührungslos austauscht. Derartige Systeme werden in technischen Einrichtungen eingesetzt, wo eine Vielzahl von Objekten bzw. Gütern möglichst schnell und frei zumindest bewegt werden müssen. Die Objekte können dabei unterschiedlichster Art sein, z.B. Pakete in einer Versandeinrichtung, Montageteile in einer Fertigungsanlage, Gepäckstücke in einem Transportsystem und vieles mehr. Dabei ist es in aller Regel erforderlich, an bestimmten Stellen der Einrichtung, z.B. einer Fertigungsanlage, etwa die Art und den Zustand der in einer räumlichen Nähe zu diesen Stellen aktuell befindlichen Objekte schnell und ungehindert zu erfassen. Hierzu werden einerseits die Objekte mit mobilen Datenspeichern versehen, welche z.B. die Art und den aktuellen Zustand des Objektes kennzeichnende Daten enthalten. Andererseits sind an den bestimmten Stellen der Einrichtung Schreib-Lese-Geräte plaziert und häufig mit zentralen Datenverarbeitungseinrichtungen verbunden.

Werden z.B. in einem Produktionsablauf solche Objekte in die räumliche Nähe einer ausgewählten Stelle befördert, so kann das dort angeordnete, stationäre Schreib-Lese-Gerät auf berührungslose Weise die Daten in den mobilen Datenspeichern der in ihrem Erfassungsbereich aktuell befindlichen Objekte erfassen und gegebenenfalls verändern. Die Daten können dann mit Hilfe einer übergeordneten zentralen Datenverarbeitungseinrichtung zu unterschiedlichen Zwecken ausgewertet werden, z.B. zur Verfolgung des Laufes der mit den mobilen Datenspeichern versehenen Objekte und zur davon abhängigen Steuerung von Betriebsmitteln der jeweiligen technischen Einrichtung.

Beim Betrieb von derartigen Identifikationssystemen tritt häufig der Fall auf, daß sich im Erfassungsbereich eines Schreib-Lese-Gerätes gleichzeitig eine Vielzahl von mobilen Datenspeichern befinden und angesprochen werden müssen. Andernfalls kann das Problem eintreten, daß pro Zeiteinheit die Kommunikation nicht zu allen mobilen Datenspeichern zu Stande kommt und einzelne den Erfassungsbereich des Schreib-Lese-Gerätes wieder verlassen haben, bevor die erforderliche Kommunikation mit dem Schreib-Lese-Gerät stattgefunden hat. Hierdurch können unterschiedlichste, unerwünschte Effekte hervorgerufen werden, z.B. einfache Datenverluste bis hin zu massiven Störung im Betriebsablauf einer Produktionsanlage.

Dieses Problem wird einerseits durch die Anzahl bzw. Dichte der den Erfassungsbereich eines Schreib-Lese-Gerätes pro Zeiteiheit durchquerenden mobilen Datenspeicher, und andererseits durch die Reichweite des jeweiligen Schreib-Lese-Gerätes, d.h. dessen Erfassungsbereich, beeinflußt. Aus Gründen der Effektivität ist man bestrebt, sowohl die Dichte der mobilen Datenspeicher als auch die Reichweite insbesondere der Schreib-Lese-Geräte möglichst groß zu wählen. In der Praxis sind derzeit die Bemühungen besonders darauf gerichtet, die Reichweite eines Identifikationssystems zu vergrößern, d.h. insbesondere die Kommunikationsreichweite der Schreib-Lese-Geräte. Hiermit können weitere Freiheitsgrade insbesondere beim konstruktiven Aufbau und Betrieb von technischen Einrichtungen, wie z.B. Produktionsanlagen, Lagersystemen, Verteilsystemen u.v.m., erzielt werden.

Bei Identifikationssystemen, welche eine über den unmittelbaren Nahbereich hinausgehende Reichweite aufweisen, d.h. etwa eine Reichweite von größer als einem halben Meter, sind verschiedene Systeme zur Abschwächung des obigen Problems bekannt geworden.

Bei einem ersten System werden die mobilen Datenspeicher unter Verwendung von Zufallsprinzipien eingeschaltet. Da hiermit aber nicht eindeutig ausgeschlossen werden kann, daß pro Zeiteinheit mehr als ein mobiler Datenspeicher eingeschaltet ist, müssen zusätzlich Kodiermittel eingesetzt werden, um eindeutige Zuordnungen zwischen Schreib-Lese-Geräten und mobilen Datenspeichern zu ermöglichen und Fehllesungen zu vermeiden. Dies ist aufwendig. Ferner muß die Anzahl der im Empfangsbereich eines Schreib-Lese-Gerätes eines derartigen Systems maximal befindlichen mobilen Datenspeicher stark begrenzt werden. Andererseits wären bei diesem System ab einer bestimmten Anzahl von mobilen Datenspeichern und bei längeren Kommunikationszeiten Kollisionen nicht vermeidbar, welche letztendlich zu einer Blockierung des Datenaustausches und damit des betroffenen Schreib-Lese-Gerätes führen würden.

Bei einem weiteren, bekannten System werden die im Empfangsbereich eines Schreib-Lese-Gerätes befindlichen mobilen Datenspeicher von dieser gezielt aktiviert. Dieses Verfahren wird sequentielles Polling genannt. Auch dieses System weist Nachteile auf. Einerseits treten durch die gezielte Aktivierung erhebliche Zeitverluste auf, welche die Kommunikationsgeschwindigkeit beeinträchtigen. Ein wesentlicher Nachteil liegt darin, daß die Adressen der mobilen Datenspeicher bekannt sein müssen. In jedem Falle müssen immer alle im System angemeldeten mobilen Datenspeicher von einem Schreib-Lese-Gerät unabhängig davon angerufen werden, ob sich diese aktuell im Erfassungsbereich befinden oder nicht.

Der Erfindung liegt die Aufgabe zugrunde, ein Verfahren anzugeben, womit eine Kommunikation, d.h. ein Datenaustausch, mit einer möglichst großen Anzahl von mobilen Datenspeichern (MDS) pro Zeiteinheit in einer möglichst effektiven und sicheren Weise möglich ist.

Diese Aufgabe wird durch die Merkmale des kennzeichnenden Teils des Patentanspruchs 1 in Verbindung mit den Merkmalen des Oberbegriffs gelöst. Vorteilhafte Verfahrensvarianten werden in den Unteransprüchen 2 - 9 beschrieben.

Das erfindungsgemäße Datenübertragungsverfahren beruht darauf, daß der während einer Datenübertragung zwischen dem Schreib-Lese-Gerät (SLG) und mindestens einem mobilen Datenspeicher fließende Datenstrom nicht kontinuierlich, sondern zeitlich gerastert ist.

Hierzu ist der Datenstrom des Schreib-Lese-Gerätes erfindungsgemäß zunächst in Rahmen (FRAMES) unterteilt, welche zeitlich aufeinander folgen und jeweils übereinstimmende Zeitdauern aufweisen.

Desweiteren ist jeder Rahmen (FRAME) des Datenstroms erfindungsgemäß in Teilrahmen (PFRAMES) unterteilt, welche zeitlich aufeinander folgen und jeweils übereinstimmende Zeitdauern aufweisen.

Schließlich sind die Teilrahmen (PFRAMES) erfindungsgemäß noch in Zeitschlitze unterteilt, welche zeitlich aufeinander folgen und ebenfalls jeweils übereinstimmende Zeitdauern aufweisen.

Die Aufteilung des Datenstromes in Rahmen (FRAMES), Teilrahmen (PFRAMES) und Zeitschlitze (SLOTS) wird von dem Schreib-Lese-Gerät (SLG) allen mobilen Datenspeichern (MDS) eines Systems in Form regelmäßig wiederholter Signalisierungsdaten (CHAS) mitgeteilt.

Weitere Einzelheiten des erfindungsgemäßen Verfahrens zur Datenübertragung (z.B. eine Anpassung an eine hohe Anzahl von mobilen Datenspeichern (MDS) oder eine Adaption an eine hohe Datenübertragungsrate) gehen aus dem im folgenden näher erläuterten Ausführungsbeispiel (Zeichnungsfigur) hervor.

Aus der Zeichnungsfigur geht die vom Schreib-Lese-Gerät (SLG) fest vorgegebene (deterministische) Struktur zur Datenübertragung zwischen dem Schreib-Lese-Gerät (SLG) und dem/den mobilen Datenspeicher(n) (MDS) hervor.

Dabei wird die Datenübertragung zwischen Schreib-Lese-Gerät (SLG) und dem mobilen Datenspeicher (MDS) in Zeitschlitze (SLOTS) eingeteilt, wobei zu Beginn jedes Zeitschlitzes (SLOT) ein Aufweckcode (WUC, wake up code) gesendet wird und der verbleibende Teil des Zeitschlitzes zur Datenübertragung zwischen dem Schreib-Lese-Gerät (SLG) und dem mobilen Datenspeicher (MDS) verwendet wird.

Dabei können in den jeweiligen Zeitschlitzen (SLOTS) entweder Signalisierungsdaten (CHAS, channel assigment slot) - hier in SLOTO - oder Kommunikationsdaten (CS, communication slot) - hier in SLOTl bis SLOT7 - übertragen werden.

Über die Signalisierungsdaten (CHAS) werden vom Schreib-Lese-Gerät (SLG) zum mobilen Datenspeicher (MDS) Daten zur Bestimmung des nachfolgenden Rahmens (FRAME) und seiner Zeitschlitze (SLOTS) hinsichtlich der Datenrichtung (z.B. uplink, down-link) und des Inhalts (Daten, Befehle) übertragen.

Bei einer getrennten uplink- und downlink-Datenübertragung, vom Schreib-Lese-Gerät (SLG) zum mobilen Datenspeicher (MDS) sowie vom mobilen Datenspeicher (MDS) zum Schreib-Lese-Gerät (SLG) wird ein Time-division-duplex-Verfahren (TDD) verwendet.

Bei einer Zuordnung der einzelnen Zeitschlitze (SLOTS) oder Teilrahmen (PFRAMES) zu unterschiedlichen mobilen Datenspeichern (MDS) können kontinuierlich Daten zwischen einem Schreib-Lese-Gerät (SLG) und einer größeren Anzahl von mobilen Datenspeichern (MDS) ausgetauscht werden. Ein solches Verfahren kann als Time-division-multiple access-Verfahren (TDMA) bezeichnet werden.

In den jeweiligen Kommunikationszeitschlitzen (CS) findet die eigentliche inhaltliche Datenübertragung zwischen dem Schreib-Lese-Gerät (SLG) und dem mobilen Datenspeicher (MDS) statt.

Über die Signalisierungsdaten (CHAS) werden vom Schreib-Lese-Gerät (SLG) auch nächste freie Kommunikationszeitschlitze (CS) angegeben, in welche die mobilen Datenspeicher (MDS) antworten können.

Bei einer gleichzeitigen Antwort zweier mobiler Datenspeicher (MDS) in einen als frei gemeldeten Kommunikationszeitschlitz (CS) wird vom Schreib-Lese-Gerät (SLG) eine Kollision festgestellt, indem z.B. die Überlagerung von mit nicht-linearen Codes versehenen Datensignalen zweier oder mehrerer Datensignale von verschiedenen mobilen Datenspeichern (MDS) detektiert wird. Zur Beseitigung dieser Kollision wählt jeder kollidierende mobile Datenspeicher (MDS) eine Zufallszahl, welche den Sendezeitpunkt einer nochmaligen Aussendung eines Datensignals vom jeweiligen mobilen Datenspeicher (MDS) zum Schreib-Lese-Gerät (SLG) festlegt.

Beim nächsten Kommunikationsversuch senden die einzelnen mobilen Datenspeicher (MDS) entsprechend den jeweiligen Zufallszahlen zu unterschiedlichen Zeitpunkten erneute Datensiganle an das Schreib-Lese-Gerät (SLG) aus, so daß eine erneute Kollision vermieden wird oder hierfür eine geringere Wahrscheinlichkeit besteht.

Falls dennoch eine erneute Kollision vorliegt, kann vom Schreib-Lese-Gerät (SLG) eine bestimmbare Anzahl erneuter Sendeversuche für die einzelnen mobilen Datenspeicher (MDS) vorgegeben oder von letzteren selbst gewählt werden.

Das erfindungsgemäße Verfahren zur Datenübertragung kann an unterschiedliche Anforderungen des Identifikationssystems angepaßt werden, indem die vom Schreib-Lese-Gerät (SLG) vorgegebene Zeitschlitzstruktur modifiziert wird.

Zur effizienten Datenübertragung mit einer großen Anzahl von mobilen Datenspeichern wird ein Rahmen (FRAME) aus einer großen Anzahl von Teilrahmen (PFRAME) gebildet, wobei die Anzahl der mobilen Datenspeicher (MDS) die Anzahl der Teilrahmen (PFRAME) übersteigen kann und die Anzahl der Teilrahmen (PFRAME) und deren Kennung über eine Teilrahmennummer im Zeitschlitz (SLOT) zur Übertragung von Signalisierungsdaten (CHAS) zu Beginn eines jeden Teilrahmens (PFRAME) vom Schreib-Lese-Gerät (SLG) gesendet wird.

Hierdurch wird eine gleichzeitige Datenübertragung und Kommunikation zwischen einem Schreib-Lese-Gerät (SLG) und der großen Anzahl von mobilen Datenspeichern (MDS) erreicht.

Wenn eine Optimierung der Datenübertragung zwischen dem Schreib-Lese-Gerät (SLG) und einem mobilen Datenspeicher (MDS) angestrebt wird, kann die Datenrate und die Verwendung jedes Zeitschlitzes (SLOT) für Senden oder Empfangen und für Daten oder Befehle innerhalb eines jeden Teilrahmens (PFRAME) für die einzelnen Teilrahmen (PFRAME) und damit für jeden mobilen Datenspeicher (MDS) unterschiedlich eingestellt werden.

Somit ermöglicht das erfindungsgemäße Verfahren zur Datenübertragung zwischen einem Schreib-Lese-Gerät (SLG) und einem mobilen Datenspeicher (MDS) durch die vom Schreib-Lese-Gerät (SLG) vorgegebene Zeitschlitzstruktur eine zuverlässige Kommunikation mit den mobilen Datenspeichern (MDS). Dabei kann die Zeitschlitzstruktur wie bereits beschrieben an die jeweiligen Anforderungen der Datenübertragung zwischen Schreib-Lese-Gerät (SLG) und den mobilen Datenspeichern (MDS) angepaßt werden.

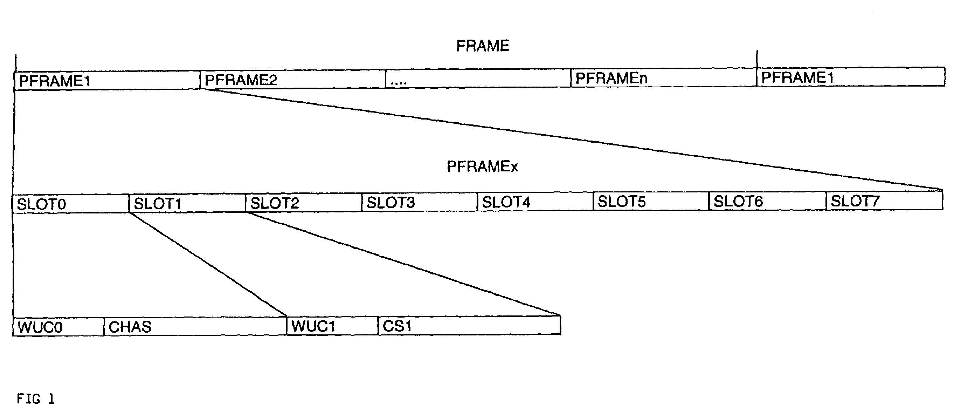

## Patentansprüche

1. Verfahren zur Datenübertragung zwischen mindestens einem Schreib-Lese-Gerät (SLG) und mindestens einem mobilen Datenspeicher (MDS) in einem Identifikationssystem mit mindestens einem an Objekten angebrachten mobilen Datenspeicher (MDS) zur Erfassung von objektbezogenen Zustands- und/oder Prozeßdaten z.B. in einem Versand-, Transport- und/oder Fertigungssystem der einzelnen Objekte,
**gekennzeichnet durch** folgende Verfahrensschritte:
a) Einteilung der Datenübertragung zwischen Schreib-Lese-Gerät (SLG) und dem mobilen Datenspeicher (MDS) in Zeitschlitze (SLOTS), wobei zu Beginn mindestens eines Zeitschlitzes (SLOT) ein Aufweckcode (WUC) vom Schreib-Lese-Gerät (SLG) zum mobilen Datenspeicher (MDS) gesendet wird und der verbleibende Teil des Zeitschlitzes (SLOT) zur Datenübertragung zwischen dem Schreib-Lese-Gerät (SLG) und dem mobilen Datenspeicher (MDS) verwendet wird,
b) Zusammenfassung mehrerer Zeitschlitze (SLOTS) zu einem Teilrahmen (PFRAME = SLOT1 + SLOT2 + ... + SLOTm) und Zusammenfassung mehrerer Teilrahmen (PFRAMEx, x = 1 ... n) zu einem Rahmen (FRAME = PFRAME1 + PFRAME2 + ... + PFRA-MEn).

2. Verfahren nach Anspruch 1,
**dadurch gekennzeichnet,** daß die jeweiligen Teilrahmen (PFRAMEx, x = 1 ... n) einzelnen mobilen Datenspeichern (MDS) zur Datenübertragung zwischen dem Schreib-Lese-Gerät (SLG) und dem mobilen Datenspeicher (MDS) zugeordnet sind oder werden.

3. Verfahren nach Anspruch 1 oder 2,
**dadurch gekennzeichnet,** daß im ersten Zeitschlitz (SLOT) Signalisierungsdaten (CHAS) vom Schreib-Lese-Gerät (SLG) zum mobilen Datenspeicher (MDS) zur Bestimmung des nachfolgenden Rahmens (FRAME) und seiner Zeitschlitze (SLOTS) hinsichtlich der Datenrichtung (z.B. Uplink, Down-link) und des Inhalts (z.B. Daten, Befehle) übertragen werden.

4. Verfahren nach einem der vorhergehenden Ansprüche,
**dadurch gekennzeichnet,** daß zur Datenübertragung mit einer großen Anzahl von mobilen Datenspeichern (MDS) ein Rahmen (FRAME) aus einer großen Anzahl von Teilrahmen (PFRAMEx, x = 1 ... n) gebildet wird, wobei die Anzahl der mobilen Datenspeicher (MDS) die Anzahl der Teilrahmen (PFRAMEx, x = 1 ... n) übersteigen kann und die Anzahl der Rahmen (FRAME) und deren Kennung (Nummer) im Zeitschlitz (SLOT) zur Übertragung von Signalisierungsdaten (CHAS) zu Beginn eines jeden Teilrahmens (PFRAMEx, x = 1 ... n) vom Schreib-Lese-Gerät (SLG)gesendet wird.

5. Verfahren nach einem der vorhergehenden Ansprüche,
**dadurch gekennzeichnet,** daß zur Optimierung der.Datenübertragung zwischen dem Schreib-Lese-Gerät (SLG) und dem mobilen Datenspeicher (MDS) die Datenrate und die Verwendung jedes Zeitschlitzes (SLOT) (Senden oder Empfangen, Daten oder Befehle) innerhalb eines Teilrahmens (PFRAME = SLOT1 + SLOT2 + ... + SLOTm) für jeden Teilrahmen (PFRAMEx, x = 1 ... n) und damit für jeden mobilen Datenspeicher (MDS) unterschiedlich einstellbar ist.

6. Verfahren nach einem der vorhergehenden Ansprüche,
**dadurch gekennzeichnet,** daß die zwischen dem mobilen Datenspeicher (MDS) und dem Schreib-Lese-Gerät (SLG) übertragenen Datensignale einen nicht-linearen Code aufweisen.

7. Verfahren nach einem der vorhergehenden Ansprüche ,
**dadurch gekennzeichnet,** daß bei gleichzeitiger Aussendung von Datensignalen zweier oder mehrerer verschiedener mobiler Datenspeicher (MDS) zur Belegung eines bereitgestellten und verfügbaren Teilrahmens (PFRAMEx, x = 1 ... n) vom Schreib-Lese-Gerät (SLG) eine Kollision festgestellt wird.

8. Verfahren nach Anspruch 7,
**dadurch gekennzeichnet,** daß beim Feststellen einer Kollision jedem der mobilen Datenspeicher (MDS) eine Zufallszahl zugeordnet wird, welche den Sendezeitpunkt einer nochmaligen Aussendung eines Datensignals vom jeweiligen mobilen Datenspeicher (MDS) zum Schreib-Lese-Gerät (SLG) bestimmt.

9. Verfahren nach einem der Ansprüche 7 oder 8,
**dadurch gekennzeichnet,** daß bei einer vorliegenden Kollision eine bestimmbare Anzahl erneuter Sendeversuche zur Übertragung von Datensignalen vom jeweiligen mobilen Datenspeicher (MDS) zum Schreib-Lese-Gerät (SLG) vorgenommen wird.
